# FASCICULE DE BREVET EUROPEEN

(11) **EP 1 744 423 B1**
(45) Date de publication et mention de la délivrance du brevet: **21.02.2018**
(21) Numéro de dépôt: 06291056.7
(22) Date de dépôt: 27.06.2006
(51) Int. Cl.: H02G 3/32

(54) **GOULOTTE DE DISTRIBUTION À DISPOSITIF DE RÉCEPTION D'UN COLLIER DE SERRAGE**
VERTEILUNGSKANAL MIT EMPFANGSEINRICHTUNG FÜR EINEN KABELBINDER
DISTRIBUTION RACEWAY WITH RECEPTION DEVICE FOR A BAND CLAMP

(30) Priorité: 11.07.2005 FR 0507375
(43) Date de publication de la demande: 17.01.2007
(73) Titulaire: Legrand France, 87000 Limoges (FR); Legrand SNC, 87000 Limoges (FR)
(72) Inventeur: Jadaud, Alain, 72240 Tennie (FR)
(74) Mandataire: Orsini, Fabienne

(56) Documents cités:
- EP-A- 1 113 552
- EP-A1- 0 752 745
- FR-A1- 2 719 167

## Description

### DOMAINE TECHNIQUE AUQUEL SE RAPPORTE L'INVENTION

La présente invention concerne, de manière générale, les goulottes du type de celles mises en oeuvre, par exemple, pour le support, le logement et la protection des conducteurs, canalisations ou autres équipements nécessaires à la desserte d'appareillages, notamment des appareillages électriques.

Elle concerne plus particulièrement une goulotte de distribution comprenant un dispositif de réception d'un collier de serrage de conducteurs ou câbles circulant dans le socle de ladite goulotte.

L'invention trouve une application particulièrement avantageuse dans la réalisation d'une goulotte électrique de faible épaisseur dont le socle est obtenu par extrusion d'une matière plastique qui a tendance à ramollir lorsque les câbles électriques qui circulent dans ledit socle atteignent des températures maximales de fonctionnement.

Toutefois l'invention peut être également appliquée à tout type de profilé recevant des conducteurs électriques tels que des gaines techniques ou des chemins de câbles par exemple.

### ARRIERE-PLAN TECHNOLOGIQUE

On connaît déjà notamment des documents FR 2 719 167, EP 1 113 552 et EP 0 554 702, des goulottes de distribution du type précité dans lesquelles le dispositif de réception du collier de serrage est un accessoire ou une découpe en forme de pont qui définit une bride sur une paroi du socle de la goulotte dans laquelle est enfilé le collier de serrage.

Toutefois, l'enfilage du collier de serrage dans la bride de réception est une opération difficile à mettre en oeuvre par un installateur sur un chantier.

En outre, l'utilisation d'un accessoire de réception à rapporter sur le socle de la goulotte représente un certain coût de fabrication et de pose dudit accessoire.

On connaît également des documents DE 43 44 144, ES 1 057 705 U, FR 2 749 914, EP 0 813 012 et WO 2004/049531 des goulottes de distribution électriques dans lesquelles le dispositif de réception du collier de serrage est un simple crochet ou un doigt d'accrochage formé ou rapporté sur une paroi du socle de la goulotte.

Le document EP0752745 divulgue un socle de goulotte qui porte sur son fond deux crochets espacés l'un de l'autre et orientés dans la même direction pour le montage d'une cloison interne à l'intérieur dudit socle. Ces dispositifs de réception du collier de serrage par simple accrochage peuvent laisser échapper le collier de serrage serré autour des conducteurs ou câbles et ne procurent pas une bonne résistance mécanique vis-à-vis de l'arrachement dudit collier.

En outre l'installateur électrique doit tenir compte de l'orientation des crochets pour positionner les socles de telles goulottes de distribution de manière que ces crochets ne soient pas dirigés vers le bas.

### OBJET DE L'INVENTION

Afin de remédier aux inconvénients de l'état de la technique précité, la présente invention propose une goulotte telle que définie dans la revendication 1 ou 2.

Ainsi, l'insertion du collier de serrage dans les deux crochets de la goulotte selon l'invention est une opération simple à mettre en oeuvre par un installateur sur un chantier.

En outre, selon l'invention, le dispositif de réception par double accrochage offre un bon maintien du collier serré autour des conducteurs ou câbles et procure une bonne résistance mécanique vis-à-vis de l'arrachement dudit collier.

D'autres caractéristiques non limitatives et avantageuses de la goulotte selon l'invention sont énoncées dans les revendications 2 à 9.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective d'un socle d'un premier mode de réalisation d'une goulotte selon l'invention ;
- la figure 2 est une vue schématique en perspective d'un socle d'un deuxième mode de réalisation d'une goulotte selon l'invention ; et
- la figure 3 est une vue en perspective du socle de la figure 1 montrant la mise en place de collier de serrage dans le dispositif de réception.

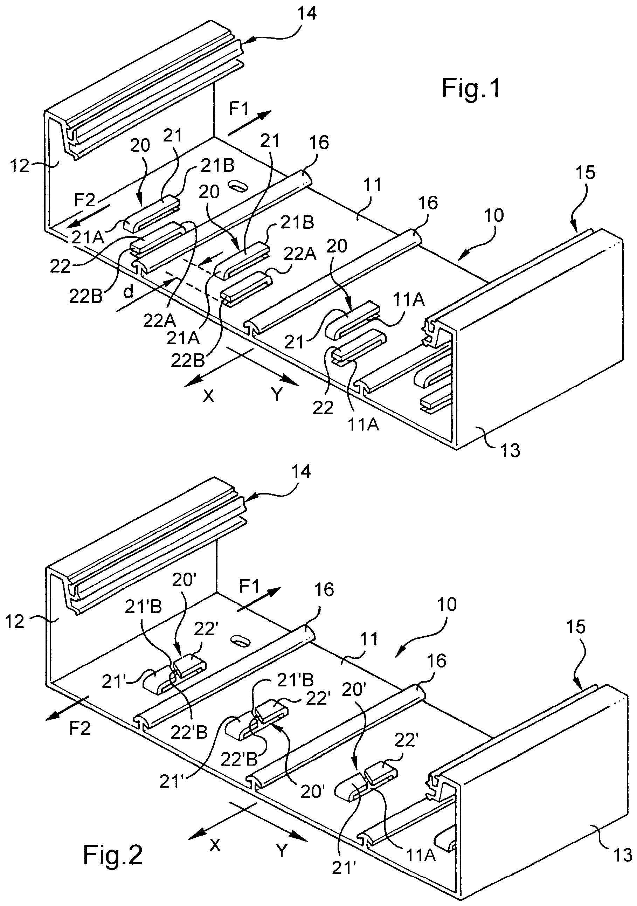

Sur les figures 1 à 3 on a représenté deux modes de réalisation d'une goulotte de distribution électrique qui comprend un socle 10, ici de section en U, avec un fond 11 à partir duquel s'élèvent perpendiculairement deux ailes latérales 12,13 parallèles. Les ailes latérales 12,13 qui bordent le fond 11 portent en tête des retours pourvus de moyen d'accrochage 14,15 d'un couvercle de fermeture (non représenté) de l'ouverture longitudinale dudit socle.En outre, de manière connue en soi, le fond 11 du socle 10 porte sur la face intérieure de son fond 11 des nervures 16 qui s'étendent en parallèle selon l'axe X longitudinal dudit socle et qui sont destinées à l'encliquetage d'une cloison de fractionnement ou de séparation de l'espace intérieur du socle. La goulotte de distribution représentée sur les figures comprend avantageusement au moins un dispositif de réception 20,20' d'un collier de serrage 1 de conducteurs ou câbles circulant dans le socle 10 de ladite goulotte.

Ce dispositif de réception 20, 20' comprend, en saillie d'une paroi du socle 10, une paire de crochets 21,22 ;21',22' ouverts dans des directions F1, F2 opposées définissant un logement de réception dudit collier de serrage 1.

Selon les deux modes de réalisation représentés sur les figures 1 et 2, il est prévu ici une pluralité de dispositifs de réception 20 ;20', c'est-à-dire une pluralité de paires de crochets 21,22 ;21',22', disposées sur la face intérieure du fond 11 du socle 10 et réparties selon l'axe X longitudinal ainsi que selon l'axe Y transversal dudit socle sur toute la largeur de celui-ci.

Selon les exemples représentés, il est prévu un dispositif de réception 20 ;20' entre chaque paroi latérale 12,13 du socle 10 et une nervure 16 et entre deux nervures 16 parallèles juxtaposées.

De cette manière, on peut avantageusement attacher au fond 11 du socle 10 un ou plusieurs colliers de serrage 1 à n'importe quelle longueur et/ou hauteur du socle 10 pour former des torons de câbles ou de conducteurs électriques.

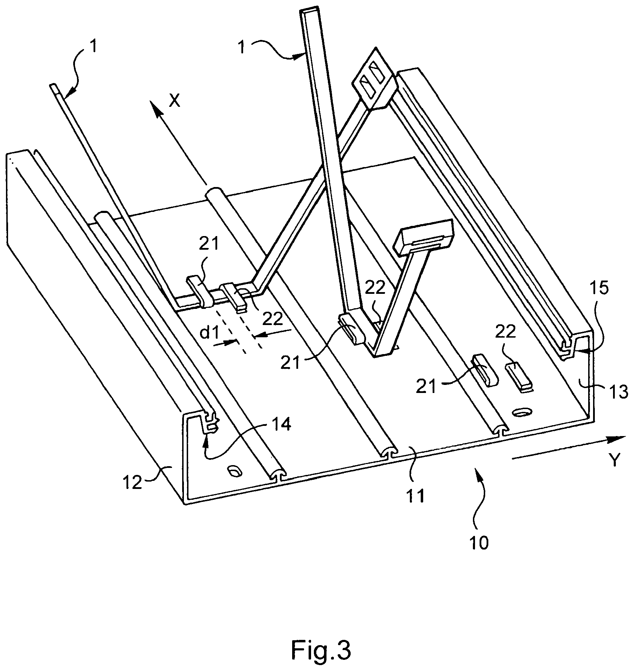

Selon le mode de réalisation représenté sur les figures 1 et 3, préférentiellement, les deux crochets 21,22 d'une paire constituant un dispositif de réception 20, sont positionnés tête-bêche selon l'axe X longitudinal du socle 10. Ils viennent de formation avec le fond 11 du socle 10 par extrusion d'une matière plastique puis par découpe et pliage de la matière extrudée et il est prévu en dessous et au droit de chaque crochet 21,22 une ouverture 11A dans le fond 11 du socle 10.

Les deux crochets 21,22 d'une même paire sont décalés l'un par rapport à l'autre d'une distance d dans la direction de leur ouverture, c'est-à-dire, ici, dans la direction de l'axe X de sorte que l'extrémité libre 21B d'un crochet 21 d'une paire s'étend, dans la direction F1 de l'ouverture de ce crochet 21, au-delà du dos 22A de l'autre crochet 22, et l'extrémité libre 22B du crochet 22 de cette paire s'étend, dans la direction F2 de l'ouverture dudit crochet 22, au-delà du dos 21A de l'autre crochet 21 de ladite paire.

Cette disposition permet avantageusement de faciliter l'introduction du collier de serrage 1 dans le logement de réception défini par les deux crochets 21,22 de ladite paire.

En outre, comme le montre la figure 3, les deux crochets 21,22 d'une même paire sont décalés latéralement (selon l'axe Y) l'un par rapport à l'autre d'une distance d1 sensiblement égale au jeu près à la largeur dudit collier de serrage 1 de largeur maximale.

La mise en place d'un collier de serrage 1 dans les crochets 21,22 d'une même paire est représentée plus particulièrement sur la figure 3.

Tout d'abord, l'installateur positionne selon l'axe X le collier de serrage 1 entre les deux crochets 21,22, puis il fait pivoter le collier de serrage 1 d'un quart de tour de manière à ce qu'il s'insère dans le logement de réception défini sous les crochets 21,22.

Les crochets 21,22 maintiennent alors solidement le collier de serrage 1 qui s'étend selon l'axe X de façon à ce que celui-ci ne puisse s'échapper ultérieurement de ces crochets.

Ce mode de réalisation est particulièrement adapté à la réalisation d'une goulotte électrique de faible épaisseur dont le socle est obtenu par extrusion d'une matière plastique avec les crochets, un tel socle ayant tendance à se ramollir lorsque les câbles électriques qui circulent dans celui-ci atteignent des températures maximales de fonctionnement.

Sur la figure 2, on a représenté un autre mode de réalisation selon lequel les crochets 21',22' d'une même paire 20' sont disposés en vis-à-vis sur le fond 11 du socle 10.

Ils s'étendent ici également selon l'axe X longitudinal du socle 10.

Ils viennent également de formation avec le fond 11 du socle 10 et il est prévu en dessous et au droit des crochets 21',22' une ouverture 11A dans le fond 11 dudit socle 10.

Les crochets 21',22' d'une même paire présentent des bords d'extrémité libre 21'B, 22'B parallèles qui ici s'étendent en biais par rapport à la direction X d'orientation dudit crochet.

L'orientation en biais des bords des crochets 21',22' en vis-à-vis est conçue pour faciliter l'introduction du collier de serrage 1 dans le logement de réception défini en dessous desdits crochets.

Les deux crochets 21',22' d'une même paire 20' peuvent être réalisés par exemple en formant un trait de scie dans la partie centrale d'un pont ou d'une bride réalisé par découpe du fond 11 du socle 10. Le trait de scie est orienté dans une direction située entre 90 et 45 degrés par rapport ici à l'axe X longitudinal du socle 10.

L'installateur introduit un collier de serrage dans la fente définie entre les deux bords d'extrémité libre 21'B,22'B des crochets 21',22' de sorte que ledit collier de serrage est engagé dans les crochets 21',22' en étant orienté selon l'orientation en biais desdits bords d'extrémité libre 21'B, 22'B. Puis, il fait pivoter ledit collier de serrage positionné dans lesdits crochets 21',22' pour le positionner selon l'axe Y transversal du socle 10.

La présente invention n'est nullement limitée aux modes de réalisation décrits et représentés, mais l'homme du métier saura y apporter toute variante conforme à son esprit.

Par exemple, on pourrait prévoir que les crochets du dispositif de réception de la goulotte selon l'invention s'étendent selon l'axe transversal du socle de la goulotte et qu'ils soient prévus sur la face intérieure d'une desdites ailes latérales dudit socle.

## Revendications

1. Goulotte de distribution comprenant au moins un dispositif de réception (20) d'un collier de serrage (1) de conducteurs ou câbles circulant dans le socle (10) de ladite goulotte, le dispositif de réception (20) comprenant, en saillie d'une paroi (11) dudit socle (10), une paire de crochets (21,22) ouverts dans des directions F1, F2 opposées, définissant un logement de réception dudit collier de serrage (1), goulotte dans laquelle les deux crochets (21,22) de ladite paire (20) sont positionnés tête-bêche, en étant, d'une part, décalés longitudinalement d'une distance d l'un par rapport à l'autre, de sorte que l'extrémité libre (21B) d'un premier crochet (21) de ladite paire (20) s'étend, dans la direction F1 de l'ouverture de ce crochet (21), au-delà du dos (22A) du deuxième crochet (22) de ladite paire (20), et l'extrémité libre (22B) dudit deuxième crochet (22) s'étend, dans la direction F2 de l'ouverture de ce crochet (22), au-delà du dos (21A) du premier.crochet (21) de ladite paire (20), et, d'autre part, décalés latéralement l'un par rapport à l'autre d'une distance d1 sensiblement égale au jeu près à la largeur dudit collier de serrage (1).

2. Goulotte de distribution comprenant au moins un dispositif de réception (20') d'un collier de serrage (1) de conducteurs ou câbles circulant dans le socle (10) de ladite goulotte, le dispositif de réception (20') comprenant, en saillie d'une paroi (11) dudit socle (10), une paire de crochets (21',22') ouverts dans des directions F1, F2 opposées, définissant un logement de réception dudit collier de serrage (1), goulotte dans laquelle les bords d'extrémité libres des deux crochets (21',22') d'une même paire (20') sont disposés en vis-à-vis.

3. Goulotte selon la revendication 2, **caractérisée en ce que** les deux crochets (21',22') présentent des bords d'extrémité (21'B,22'B) libre parallèles qui s'étendent en biais par rapport à la direction d'orientation desdits crochets (21',22').

4. Goulotte selon l'une des revendications 1 à 3, **caractérisée en ce que** les crochets (21,22 ; 21',22') s'étendent selon l'axe longitudinal (X) du socle (10) de la goulotte.

5. Goulotte selon l'une des revendications 1 à 3, **caractérisée en ce que** les crochets s'étendent selon l'axe transversal du socle de la goulotte.

6. Goulotte selon l'une des revendications 1 à 5, **caractérisée en ce que** les crochets (21,22 ; 21',22') viennent de formation avec le socle (10) de la goulotte par extrusion d'une matière plastique.

7. Goulotte selon l'une des revendications 1 à 6, **caractérisée en ce qu'**il est prévu une pluralité de paires de crochets (20 ; 20') sur ladite paroi (11) du socle (10) de la goulotte.

8. Goulotte selon l'une des revendications 1 à 7, **caractérisée en ce que** chaque paire de crochets (20 ; 20') est positionnée sur le fond (11) dudit socle (10).

9. Goulotte selon l'une des revendications 1 à 8, **caractérisée en ce que** chaque paire de crochets est positionnée sur une aile latérale du socle.

## Patentansprüche

1. Leitungskanal mit wenigstens einer Vorrichtung (20) zum Aufnehmen einer Kabelschelle (1) für im Sockel (10) des Kanals verlaufende Leiter oder Kabel, wobei die Aufnahmevorrichtung (20), auf einer Wand (11) des Sockels (10) hervorstehend, ein Paar in entgegengesetzten Richtungen F1, F2 offene Haken (21, 22) aufweist, die einen Raum zur Aufnahme der Kabelschelle (1) definieren, in welchem Kanal die beiden Haken (21, 22) des besagten Paars (20) entgegengesetzt angeordnet sind und gleichzeitig einerseits um einen Abstand d in Längsrichtung gegeneinander versetzt sind, so daß sich das freie Ende (21B) eines ersten Hakens (21) des Paars (20) in der Richtung F1 der Öffnung dieses Hakens (21) über den Rücken (22A) des zweiten Hakens (22) hinaus erstreckt und sich das freie Ende (22B) des zweiten Hakens (22) in der Richtung F2 der Öffnung dieses Hakens (22) über den Rücken (21A) des ersten Hakens (21) des Paars (20) hinaus erstreckt, und andererseits seitlich um einen Abstand d1 gegeneinander versetzt sind, der bis auf das Spiel im Wesentlichen gleich der Breite der Kabelschelle (1) ist.

2. Leitungskanal mit wenigstens einer Vorrichtung (20') zum Aufnehmen einer Kabelschelle (1) für im Sockel (10) des Kanals verlaufende Leiter oder Kabel, wobei die Aufnahmevorrichtung (20'), auf einer Wand (11) des Sockels (10) hervorstehend, ein Paar in entgegengesetzten Richtungen F1, F2 offene Haken (21', 22') aufweist, die einen Raum zur Aufnahme der Kabelschelle (1) definieren, in welchem Kanal die Ränder der freien Enden der beiden Haken (21', 22') eines selben Paars (20') gegenüberliegend angeordnet sind.

3. Leitungskanal gemäß Anspruch 2, **dadurch gekennzeichnet, daß** die beiden Haken , ,21', 22') parallele Ränder der freien Enden (21'B, 22'B) aufweisen, die in Bezug auf die Ausrichtung der Haken (21', 22') schräg verlaufen.

4. Leitungskanal gemäß einem der Ansprüche 1 bis 3, **dadurch gekennzeichnet, daß** sich die Haken (21, 22; 21', 22') entlang der Längsachse (X) des Sockels (10) des Kanals erstrecken.

5. Leitungskanal gemäß einem der Ansprüche 1 bis 3, **dadurch gekennzeichnet, daß** sich die Haken entlang der Querachse des Sockels des Kanals erstrecken.

6. Leitungskanal gemäß einem der Ansprüche 1 bis 5, **dadurch gekennzeichnet, daß** die Haken (21, 22; 21', 22') mit dem Sockel (10) des Kanals durch Extrusion eines Plastikmaterials einstückig hergestellt sind.

7. Leitungskanal gemäß einem der Ansprüche 1 bis 6, **dadurch gekennzeichnet, daß** auf der Wand (11) des Sockels (10) des Kanals eine Mehrzahl von Hakenpaaren (20; 20') vorgesehen ist.

8. Leitungskanal gemäß einem der Ansprüche 1 bis 7, **dadurch gekennzeichnet, daß** jedes Paar Haken (20; 20') auf dem Boden (11) des Sockels (10) angeordnet ist.

9. Leitungskanal gemäß einem der Ansprüche 1 bis 8, **dadurch gekennzeichnet, daß** jedes Paar Haken auf einem Seitenflügel des Sockels angeordnet ist.

## Claims

1. A distribution cable tray comprising at least one receiver device (20) for receiving a clamping collar (1) for clamping cables or conductors extending in the base (10) of said cable tray, the receiver device (20) comprising a pair of hooks (21, 22) projecting from a wall (11) of said base (10), the hooks being open in opposite directions F1, F2, and together defining a reception housing for said clamping collar (1); in which cable tray the two hooks (21, 22) of said pair (20) are positioned head-to-tail, side-by-side; being, firstly, offset longitudinally by a distance d relative to each other, such that the free end (21B) of a first hook (21) of said pair (20) extends in the direction F1 of the opening of the hook (21), beyond the back (22A) of the second hook (22) of said pair (20); and the free end (22B) of said second hook (22) extends, in the direction F2 of the opening of the hook (22), beyond the back (21A) of the first hook (22) of said pair (20); and, secondly, offset laterally relative to each other by a distance d1 that is substantially equal to the width of said clamping collar (1), ignoring clearance.

2. A distribution cable tray comprising at least one receiver device (20') for receiving a clamping collar (1) for clamping cables or conductors extending in the base (10) of said cable tray, the receiver device (20') comprising a pair of hooks (21', 22') projecting from a wall (11) of said base (10), the hooks being open in opposite directions F1, F2, and together defining a reception housing for said clamping collar (1); in which cable tray the free end edges of the two hooks (21', 22') of a single pair (20') are disposed facing each other.

3. A cable tray according to claim 2, **characterized in that** the two hooks (21', 22') present parallel free end edges (21'B, 22'B) that extend at an angle relative to the direction in which said hooks (21', 22') extend.

4. A cable tray according to any one of claims 1 to 3, **characterized in that** the hooks (21, 22; 21', 22') extend along the longitudinal axis (X) of the base (10) of the cable tray.

5. A cable tray according to any one of claims 1 to 3, **characterized in that** the hooks extend along the transverse axis of the base of the cable tray.

6. A cable tray according to any one of claims 1 to 5, **characterized in that** the hooks (21, 22; 21', 22') are formed integrally with the base (10) of the cable tray by extruding a plastics material.

7. A cable tray according to any one of claims 1 to 6, **characterized in that** a plurality of pairs of hooks (20; 20') are provided on said wall (11) of the base (10) of the cable tray.

8. A cable tray according to any one of claims 1 to 7, **characterized in that** each pair of hooks (20; 20') is positioned on a bottom web (11) of said base (10).

9. A cable tray according to any one of claims 1 to 8, **characterized in that** each pair of hooks is positioned on a side flange of the base.
